# EUROPÄISCHE PATENTSCHRIFT

(11) **EP 0 672 089 B1**
(45) Veröffentlichungstag und Bekanntmachung des Hinweises auf die Patenterteilung: **28.01.1998**
(21) Anmeldenummer: 94901883.2
(22) Anmeldetag: 26.11.1993
(51) Int. Cl.: C09D 5/08, C09D 191/08, C09D 191/06, C09D 191/00

(54) **BESCHICHTUNGSMITTEL MIT WÄRMEHÄRTENDER FILMBILDUNG UND DESSEN VERWENDUNG**
THERMO-SETTING, FILM-FORMING COATING AGENTS AND THEIR USE
ENDUITS FILMOGENES THERMODURCISSABLES ET LEUR UTILISATION

(30) Priorität: 04.12.1992 DE 4240810
(43) Veröffentlichungstag der Anmeldung: 20.09.1995
(73) Patentinhaber: Henkel Teroson GmbH, 69123 Heidelberg (DE)
(72) Erfinder: WESCH, Karl, D-69429 Waldbrunn (DE); STAMM, Dieter, D-68526 Ladenburg (DE); REITENBACH, Dirk, D-69214 Eppelheim (DE); SCHWITTAY, Winfried, D-72218 Wildberg (DE)
(74) Vertreter: Mathes, Nikolaus
(86) Internationale Anmeldenummer: EP9303316
(87) Internationale Veröffentlichungsnummer: WO9413744

(56) Entgegenhaltungen:
- EP-A- 0 405 879
- WO-A-89/04856
- WO-A-89/09803
- DE-A- 3 008 018
- DE-C- 2 454 235

## Beschreibung

Die Erfindung betrifft ein Beschichtungsmittel auf der Basis von Wachsen oder wachsartigen Verbindungen oder lufttrocknenden Ölen oder Alkydharzen.

Zum Schutz gegen Korrosion werden metallische Substrate mit filmbildenden Beschichtungen versehen. Insbesondere bei Gegenständen aus Stahl, wie z.B. im Automobilbau werden hierfür je nach Anforderung eine Reihe von verschiedenen Beschichtungstypen verwendet. Konstruktionsbedingt haben z.B. Automobilkarosserien eine Reihe von schwer zugänglichen Hohlräumen und Fügenähte, die während der normalen Lackierprozesse nur unzureichend beschichtet werden, und die üblicherweise mit Wachsen oder wachsartigen Zusammensetzungen beschichtet werden. Diese Zusammensetzungen müssen ein sehr gutes Benetzungsverhalten und Haftverhalten für das zu beschichtende Substrat haben, gute Wasser (dampf)-Sperrwirkung besitzen sowie während der Applikation ein gutes Kriechverhalten, um mittels kapillarer Kräfte in die feinen kapillaren Hohlräume der Fügenähte einzudringen und gegebenenfalls vorhandene Wasserschichten zu verdrängen. Wie oben erwähnt, werden diese Beschichtungen an schwer zugänglichen Stellen eingesetzt, daher werden an die mechanische Festigkeit, Härte und Abriebbeständigkeit im allgemeinen nur geringere Anforderungen gestellt. Häufig werden diese Zusammensetzungen auch als "Hohlraumversiegelungsmittel" bezeichnet.

Wachse und/oder Fette bzw. Öle als Bindemittel werden für diese Korrosionsschutzbeschichtungen schon seit langer Zeit erfolgreich eingesetzt. Als Wachse können dabei pflanzliche Wachse (wie z.B. Carnaubawachs, Montanwachs), tierische Wachse, Mineralwachse, insbesondere petrochemische Wachse (wie z.B. Petrolatum, oxydiertes Petrolatum, Paraffinwachse oder Mikrowachse), chemisch modifizierte Wachse oder auch synthetische Wachse eingesetzt werden. Des weiteren können trocknende Öle oder deren chemische Modifikation wie z.B. langölige Alkydharze entweder allein oder in Kombination mit obigen Wachsen eingesetzt werden, auch synthetische Kohlenwasserstoffharze finden Verwendung.

Als weiteren Bestandteil enthalten die Korrosionsschutzbeschichtungen Korrosionsinhibitoren, dies können beispielsweise anorganische Pigmente, organische Inhibitoren wie z.B. Amine oder deren Salze oder Metallsalzdispersionen sein. Ein Vertreter der letzteren, die sogenannten überbasischen Calciumsal-ze von organischen Sulphonsäuren, werden besonders häufig für Korrosionsschutzbeschichtungen verwendet, da sie offensichtlich sehr wasserdampfdiffusionsdichte Filme bilden und aufgrund ihrer basischen Natur korrosionsfördernde Säurespuren aus der Umgebung neutralisieren können, eine Übersicht zu diesen Metallsalz-Dispersionen findet sich z.B. bei R.M. Morawek, Modern Paint Coatings, 69 (18979), 49-51. Diese Metallsalz-Dispersionen sind auch unter dem Handelsnamen "SACI" (Severe Atmospheric Corrosion Inhibitors) bekannt.

Die überbasischen Calciumsalze von organischen Sulphonsäuren werden z.B. hergestellt durch Einrühren von Calciumoxid und/oder -hydroxid in alkoholische oder wässrig-alkoholische Lösungen von Sulphonsäuren von Paraffin-Kohlenwasserstoffen und anschließendes Einleiten von Kohlendioxid, wobei so viel Calciumoxid bzw. - hydroxid verwendet wird, daß ein erheblicher Überschuß an Calciumoxid bzw.-hydroxid in der Dispersion verbleibt. Überbasische Calciumsulphonate im Sinne dieser Erfindung und deren Herstellung und Verwendung als Schmiermittel oder Rostschutzmittel wurden z.B. in der DE 1919317 oder in der EP 405879 beschrieben.

Übliche weitere Bestandteile der Formulierungen sind Pigmente, auch z.B. sogenannte Korrosionsschutzpigmente, und/ oder Füllstoffe wie Kreiden, wobei letztere sowohl die natürlichen gemahlenen als auch die feinteiligeren gefällten Kreiden sein können, sowie Mahl- oder Dispergierhilfen in Form von fettsauren Salzen von organischen Aminen und, bei Anwesenheit von trocknenden Ölen und/oder Alkydharzen, Hautverhinderungsmittel sowie sogenannte Trockner oder Sikkative, die die oxidative Vernetzung der trocknenden Öle oder Alkydharze katalysieren.

Die Korrosionsschutzbeschichtungsmittel können entweder als Lösung oder Dispersionen in organischen Lösungsmitteln wie Kohlenwasserstoffen (Benzinen) oder Chlorkohlenwasserstoffen durch spezielle Düsen, wie z.B. in der DE-C-2711596 beschrieben, aufgesprüht werden. Zur Vermeidung von flüchtigen organischen Bestandteilen wird in der DE-A-2755947 ein sogenannter "Flutwachsprozess" vorgeschlagen. Hierbei werden in einem ersten Verfahrensschritt die Hohlräume mit aufgeschmolzenen wachsartigen korrosionsverhindernden Materialien "geflutet". In einem zweiten Schritt läßt man dann das überschüssige, noch flüssige Material aus den Hohlräumen ablaufen.

Vorzugsweise sollten die Korrosionsschutz-Beschichtungsmittel eine niedrige Viskosität haben, damit auch bei niedriger Schichtstärke der Beschichtung eine vollständige Bedeckung der metallischen Oberfläche, einschließlich der kapillaren Hohlräume, erfolgt.

Daher sind, mit Ausnahme der Zusammensetzungen für den Flutwachsprozess nahezu alle Zusammensetzungen für diese Korrosionsschutzbeschichtungen verdünnte Lösungen in leicht flüchtigen organischen Lösungsmitteln oder Dispersionen in organischen Lösungsmitteln oder Wasser.

Die lösungsmittelfreien Systeme sind z.B. Korrosionsschutzöle analog zu den in der DE 1919317 beschriebenen Zusammensetzungen, bestehend aus einem überbasischen Calciumsulphonat, Mineralöl und einer Benzinfraktion ("Stoddard"-Lösungsmittel). Diese werden meistens bei Raumtemperatur versprüht und bilden einen öligen, meist klebrigen Film. Die Flutwachse bilden nach Erkalten einen mehr oder weniger festen Film, bei den lösungsmittelfreien Produkten auf Basis von Alkydharzen oder trocknenden Ölen wie z.B. Leinölfirnis setzt nach der Applikation eine langsam ablaufende oxidative Vernetzung des Films ein. Bei den lösungsmittelhaltigen Dispersionen oder Lösungen erfolgt die Filmbildung meist rein physikalisch nach dem Verdampfen des Lösungsmittels.

Nachteilig bei allen bisher beschriebenen Zusammensetzungen für Korrosionsschutzbeschichtungen sind deren Temperaturempfindlichkeit und sehr geringe mechanische Beständigkeit unmittelbar nach dem Aufbringen der Beschichtung. Bei der Herstellung von Automobilen erfolgt diese Beschichtung schon früh im Fertigungsprozess. Häufig neigen die oben beschriebenen Beschichtungen zum "Nachlaufen" nach dem Trocknen, d.h. insbesondere bei weiterer Temperaturbeaufschlagung im Fertigungsprozess werden die bereits applizierten Korrosionsschutzbeschichtungen so dünnflüssig, daß das Material von der Karosserie abläuft bzw. abtropft, so daß es zum Auslaufen und Verschmutzen der Karosserien sowie von Förder- und Montagebändern und Arbeitsplätzen in den Montagewerken kommt. Außerdem kann es zur sogenannten Sumpfbildung kommen, d.h. der Ansammlung des abgelaufenen Materials in tiefliegenden Sicken und Hohlräumen der Karosserien. Dieses führt zu Behinderungen bei nachfolgenden Montagearbeiten.

Es hat nicht an Versuchen gefehlt, diesen Mangel zu beheben, so beschreibt die EP 259 271 den Zusatz von vinylischen Polymeren. Diese werden in situ in der Korrosionsschutzmittel-Zusammensetzung durch radikalische Polymerisation von vinylischen Monomeren wie z.B. Methacrylsäure durch radikalische Polymerisation erzeugt. Dieses Verfahren reduziert zwar das Abtropfverhalten nach der Applikation des Mittels auf der Karosserie, jedoch ist die Viskosität dieser Zusammensetzungen so hoch, daß nur sehr verdünnte Lösungen bzw. Dispersionen in organischen Lösungsmitteln verwendet werden können. Dies ist jedoch aus Umweltschutzgründen unerwünscht.

Die DE-A-2825739 schlägt ein lösungsmittelfreies Korrosionsschutzmittel vor. Dieses besteht im wesentlichen aus einem Petroleumsulphonatkomplex des Calciums und/oder Magnesiums in einem nichtflüchtigen Verdünnungsöl, oxidierten Petrolatum, mikrokristallinen Wachs, Korrosionsschutzpigment sowie einem thermoplastischen Kohlenwasserstoffharz. Diese Masse ist zwar frei von flüchtigen Lösungsmitteln, jedoch muß das Material auf Temperaturen von 135°C bis 150°C aufgeheizt werden, um durch Versprühen applizierbar zu werden. Abgesehen von notwendigem erhöhtem Aufwand bei der Herstellung und bei der Applikation des Materials treten auch Schwierigkeiten bei der gleichmäßigen Benetzung der kalten Substrate wie z.B. der Automobil-Karosserien auf. Dies wäre nur durch ein aufwendiges Aufheizen der Karosserien zu umgehen.

Die US-A-4386173 schlägt in ähnlicher Weise Korrosionsschutzmittel vor, die aus Petroleumsulphonat-Komplexen, Wachsen, Pigmenten, Füllstoffen, nicht flüchtigen Ölen und einem Epoxidharz-Elastomer bestehen. Auch diese Materialien müssen bei Temperaturen von mindestens 135°C versprüht werden.

Es bestand also die Aufgabe, ein lösungsmittelfreies oder lösungsmittel armes Korrosionsschutzmittel für Beschichtungen bereitzustellen, das genügend niedrige Viskosität besitzt, um in herkömmlichen Anlagen bei Raumtemperatur versprüht werden zu können. Zusätzlich sollte die Beschichtung mit einfachen Mitteln in eine Form überführt werden können, die das Ablaufen und Verschmutzen von Karosserieteilen oder Anlagebestandteilen mit Sicherheit verhindert.

Erfindungsgemäß wurde diese Aufgabe dadurch gelöst, daß an sich bekannten Korrosionsschutzbeschichtungsmitteln auf der Basis von Wachsen, wachsartigen Verbindungen oder lufttrocknenden Ölen oder Alkydharzen, ggf. Lösungsmitteln, nicht flüchtigen Ölen, Verlaufshilfsmitteln und korrosionsverhindernden Zusätzen außerdem noch Bestandteile zugesetzt wurden, die bei höherer Temperatur gelieren. Überraschend wurde jetzt gefunden, daß bereits geringe Zusätze von an sich bekannten Polymerpulvern sowie Weichmachern ausreichen, um die Beschichtungen nach der Applikation auf der Karosserie (durch Sprühen oder Tauchen) bei erhöhten Temperaturen so zu gelieren, daß ein Ablaufen oder Abtropfen im weiteren Fertigungsprozess sicher verhindert wird. Dabei bleiben die positiven Eigenschaften der herkömmlichen Korrosionsschutzmittel wie gute Benetzung, vollständiger Filmverlauf, gutes Eindringen in kapillare Hohlräume sowie das Verhindern von Unterrostungen im Salzsprühtest gemäß DIN ISO 4326 oder DIN 53167.

Als Filmbildner werden wachse oder wachsartige Verbindungen wie Polyethylenwachse, Paraffinwachse, Mikrowachse oder Kohlenstoff- und/oder Esterharze oder Alkydharze oder trocknende Öle entweder einzeln oder in Kombination verwendet.

Als Polymerpulver können dabei grundsätzlich alle Polymere verwendet werden, die mit Weichmachern bei höherer Temperatur einen ähnlichen Gelierprozeß durchlaufen, wie sie von PVC-Plastisolen her bekannt sind. Die zugesetzte Menge an Polymerpulver richtet sich nach der Viskosität der Basisformulierung und den Verarbeitungsgegebenheiten bei und nach der Applikation des Beschichtungsmittels. Sie kann zwischen 0.1 und 15 Gew.% der Zusammensetzung betragen, vorzugsweise werden 3 bis 7 Gew.% zugesetzt. Diese Polymerpulver müssen drei wesentliche Kriterien erfüllen:
- sie müssen genügend feinteilig sein, damit die Dispersion problemlos auf Spritzanlagen verarbeitbar ist, in der Regel sollten die Teilchen (auch Agglomerat-Teilchen) kleiner als 100 pm, vorzugsweise kleiner als 60 µm sein,
- bei Raumtemperatur dürfen die Polymeren nicht oder nicht nennenswert in den üblichen Rezepturbestandteilen löslich sein bzw. quellbar sein,
- bei der erhöhten Geliertemperatur soll das Polymer in kurzer Zeit vollständig durch den Weichmacher-Zusatz geliert werden, wobei nach dem Abkühlen keine Separation des Weichmachers aus der Polymerphase erfolgen darf.

Eine Reihe gängiger Polymere erfüllt diese Voraussetzungen. Zu diesen gehören beispielsweise: Polyvinylchlorid, Vinylchlorid-Vinylacetat-Copolymere, Copolymere der C₁- bis C₈-Alkylester der Methacrylsäure oder Acrylsäure wie sie z.B. in der DE-C-2454235 bzw. der DE-C-2529732 beschrieben sind - dabei können letztere ggf. weitere Comonomere enthalten -, Polystyrol, Copolymere des Styrols mit Methacrylsäure, deren C₁- bis C₈-Alkylester und/oder Acrylnitril, die ggf. weitere Comonomere enthalten können. Beispiele für geeignete Styrol-Copolymere sind in der DE-A-4034725 oder in der EP-A-261499 beschrieben. Auch Kombinationen der oben genannten Polymerpulver sind möglich.

Der Begriff "Weichmacher" im Sinne der vorliegenden Erfindung geht über den herkömmlichen Bereich hinaus. Die an sich bekannten Weichmacher wie die C₄- bis C₁₄-Alkylester der Phthalsäure, der Adipinsäure oder der Sebazinsäure, Alkylsulfonsäureester des Phenols - wie z.B. unter dem Handelsnamen Mesamoll vertrieben -, Alkyl- und/ oder Arylester der Phosphorsäure sind hierfür ebenso geeignet wie Ester der Kolophonium-Harzsäuren, aliphatische und/oder aromatische Kohlenwasserstoffharze in Kombination mit Benzinen sowie Oxime, die bisher nur als Hautverhinderungsmittel für trocknende Öle bzw. Alkydharze beschrieben worden sind.

Weichmacher im Sinne dieser Erfindung sind alle Rezepturbestandteile, die einzeln oder in Kombination bei der erhöhten Geliertemperatur ein ausreichendes Löseverhalten für das oder die in dispergierter Form vorliegende Polymerpulver gemäß obiger beispielhafter Aufzählung besitzen, um diese zu lösen und dadurch den Gelierprozess auszulösen. Vor der Gelierung sollen sie bei Raumtemperatur ein möglichst schlechtes Löseverhalten für das Polymerpulver haben, um eine gute Lagerstastabilität der Zusammensetzung zu gewährleisten. Die Menge des eingesetzten Weichmachers richtet sich nach der Art und Menge des Polymerpulvers, sie liegt zwischen 0.1 und 15 Gew.%, vorzugsweise zwischen 3 und 10 Gew.%.

Um eine geeignete niedrige Viskosität der lösungsmittelarmen bzw. -freien Korrosionsschutzbeschichtungsmittel zu gewährleisten, enthalten diese normalerweise größere Mengen an nichtflüchtigen Ölen, vorzugsweise sind dies trocknende Öle wie z.B. Leinölfirnis oder sogenannte langölige Alkydharze.

Die gelierenden Zusätze bewirken, daß die Beschichtungsmittel bereits nach sehr kurzer Temperaturbeaufschlagung so stark gelieren, daß ein Ablaufen oder Abtropfen auch bei erneuter Temperaturbelastung vermieden wird. Die Gelierzeiten sind dabei nicht kritisch, sie bewegen sich jedoch in der Regel im Bereich von 3 bis 20 Minuten, vorzugsweise 5 bis 10 Minuten bei Temperaturen von 60°C bis 160°C, vorzugsweise zwischen 80°C und 120°C. Die Erwärmung kann dabei in herkömmlichen Trockenöfen, wie sie zur Lackierung der AutomobilKarosserien verwendet werden, erfolgen oder durch geeignet angebrachte Infrarot(IR)-Strahler.

Als Verlaufshilfsmittel werden kationische Netzmittel oder grenzflächenaktive flüssige Harze verwendet.

Als korrosionsverhindernde Zusätze werden überbasische Calciumsulphonate, Füllstoffe, Korrosionsschutzpigmente oder Metallsalze von oxidierten Hachsen entweder allein oder in Kombination verwendet.

Die nachfolgenden Ausführungsbeispiele für zwei typische Hohlraumversiegelungsmittel zeigen deutlich, daß nur verhältnismäßig geringe Mengen der erfindungsgemäßen, bei höherer Temperatur gelierenden Zusätze erforderlich sind, um das Ablaufverhalten dieser Hohlraumversiegelungen bzw. Korrosionsschutzbeschichtungen deutlich zu verbessern. Die Mengenangaben in den nachfolgend genannten Beispielen sind Gewichtsteile, sofern nicht anders angegeben.

### Vergleichsbeispiel 1:

Das nachfolgende Beispiel beschreibt eine Beschichtungszusammensetzung mit etwa 60 Gew.% nicht flüchtigen Bestandteilen gemäß dem Stand der Technik. Der Herstellungsprozeß beinhaltet drei Verfahrensstufen.

### Herstellung der Hartlösung:

In einem Rührbehälter werden bei etwa 70 bis 80°C die folgenden Bestandteile mit Hilfe eines schnellaufenden Rührers, wie z.B. einem Ultra-Turrax homogenisiert:

| | |
|---|---|
| Kohlenwasserstoffharz aus Vinyltoluol/Styrol/Inden | 23.6 Teile |
| oxidiertes Petrolatum, Säurezahl 50 | 4.0 Teile |
| Mischung aus Mikro-Paraffinwachs- und Gatsch, Erstarrungspunkt ca. 65°C | 4.0 Teile |
| Saures Alkyl-aryl-Polyglycoletherphosphat | 1.1 Teile |
| Mischung von Fettsäurealkanolamiden | 2.2 Teile |
| Testbenzin 135/180 | 33.1 Teile. |

Nach dem Homogenisieren wird die Harzlösung auf Raumtemperatur abgekühlt.

### Mahlpaste:

In einem Rührgefäß mit einem schnellaufenden Rührer wie z.B. dem Ultra-Turrax werden die folgenden Bestandteile für mindestens 5 Min. homogenisiert:

| | |
|---|---|
| Überbasisches Calciumsulfonat in Mineralöl (z.B. PCA 11507 Fa. Exxon) | 8.0 Teile |
| Calciumsulfonat-Calciumcarbonat-Komplex mit einem Zusatz von Testbenzin | 3.0 Teile |
| Technisches Weißöl | 9.4 Teile |
| Gefällte Kreide | 6.0 Teile |
| Magnesium Montmorillonit | 1.7 Teile |
| Testbenzin 135/180 | 3.0 Teile |
| n-Propanol | 0.9 Teile. |

Bei diesem Mischprozeß erwärmt sich die Mahlpaste auf etwa 30 bis 40° C, nach dem Homogenisieren wird diese Paste auf Raumtemperatur abgekühlt.

Bei Raumtemperatur werden mit einem langsamlaufenden Rührer die Harzlösung und die Mahlpaste miteinander homogen vermischt. Dieses Beschichtungsmittel hat etwa 60% Festkörpergehalt und eine Viskosität von 80 mPa.s.

### Beispiel 2 (erfindungsgemäßes Beispiel):

Zu 100 Teilen des auf Raumtemperatur abgekühlten Beschichtungsmittels gemäß Beispiel 1 werden drei Teile eines Terpolymerpulvers bestehend aus etwa 64% Methylmethacrylat, 34% Butylmethacrylat und 2% Methacrylsäure mit Hilfe eines langsamlaufenden Rührers zugemischt. Innerhalb der MeBgenauigkeit hat sich die Viskosität dieser Zusammensetzung gegenüber dem Beispiel 1 nicht erhöht.

### Beispiel 3 (erfindungsgemäß):

Analog zu Beispiel 2 werden zu 100 Teilen des Beschichtungsmittels gemäß Beispiel 1 drei Teile eines Styrol-Methacrylsäurecopolymers gemäß DE-A-4034725 zugegeben. Auch hier ändert sich die Viskosität der Zusammensetzung nicht meßbar.

Mit den drei Beschichtungsmitteln gemäß Beispiel 1 bis 3 werden die nachfolgend beschriebenen Eignungstests durchgeführt.

### Ablauf bei 23°C:

Bei diesem Test wird das Ablaufverhalten des Beschichtungsmittels bei Raumtemperatur untersucht, indem mit einer Eppendorf-Pipette bzw. mit einer geeigneten Einmalspritze 0.2 ml des Beschichtungsmittels auf ein waagerecht liegendes Stahlblech punktförmig aufgetragen werden, anschließend wird dieses Blech senkrecht gestellt und gewartet, bis das Material nicht mehr fließt. Danach wird die durch das Material vom Auftropfpunkt bis zum Endpunkt benetzte Strecke gemessen.

### Ablauf nach Wärmebehandlung:

In gleicher Weise wie oben beschrieben wird das Beschichtungsmittel punktförmig auf das Blech aufgetragen, danach wird das Blech in waagerechter Lage für 5 Min. bei 80°C erwärmt. Danach wird das Blech sofort senkrecht gestellt und gewartet, bis die Masse nicht mehr fließt und in gleicher Weise wie oben die durch das Material benetzte Strecke gemessen.

### Penetration - Kriechvermögen:

Auf ein Stahlblech mit den Abmessungen 200 x 100 mm werden im Abstand von 50 mm zwei 100µm dicke Folienstreifen parallel zur Längskante des Bleches als Abstandshalter aufgelegt. Auf dieses Blech wird ein zweites Blech gelegt und mit ersterem verschraubt. Das zweite Blech ist entlang seiner kurzen Achse um 45°C abgewinkelt, so daß sich der durch die Folienstreifen gebildete kapillare Hohlraum zwischen den beiden Blechstreifen trichterförmig öffnet. Bei waagerechter Lage der Bleche werden auf die Unterseite des nach oben abgewinkelten Schenkels des oberen Bleches mit Hilfe einer Pipette 2x 5 ml des Beschichtungsmittels so aufgetragen, daß dieses entlang des abgewinkelten Schenkels nach unten in den kapillaren Zwischenraum fliessen kann. Anschließend wird die komplette Apparatur 24 h bei Normalklima 23/50-2 DIN 50014 gelagert. Nach dem Trennen der Bleche erfolgt die Beurteilung durch das Ausmessen der Kriechstrecke des Beschichtungsmittels im kapillaren Hohlraum.

Aus den in der nachfolgenden Tabelle geführten Meßwerten kann entnommen werden, daß der Ablauf bei 23°C zwischen dem Beschichtungsmittel gemäß Beispiel 1 und den erfindungsgemäßen Beispielen nur unwesentlich verändert hat. Das gleiche gilt für die Penetration (Kriechvermögen). Der Ablauf nach kurzzeitiger Wärmebehandlung ist jedoch in erwünschter Weise drastisch reduziert worden.

**Tabelle 1**

| | Beisp. 1 | Beisp. 2 | Beisp. 3 |
|---|---|---|---|
| Ablauf bei 23°C | 25 cm | 22 cm | 19 cm |
| Penetration bei 23°C | 12 cm | 10 cm | 8 cm |
| Ablauf nach 5 min 80°C | 13 cm | 6 cm | 1 cm |

### Vergleichsbeispiel 4:

Dieses Beispiel ist eine lösungsmittelfreie Beschichtung gemäß Stand der Technik. Analog zu Beispiel 1 werden die folgenden Komponenten hergestellt:

### Harzlösung:

| | |
|---|---|
| Oxydiertes Petrolatum, Säurezahl 50 | 1.0 Teile |
| Calcium-Lanolat | 2.5 Teile |
| Leinölfirnis | 26.0 Teile |
| Langöliges, lösungsmittelfreies Alkydharz | 5.0 Teile |

### Mahlpaste:

| | |
|---|---|
| Überbasisches Calciumsulfonat | 35.0 Teile |
| Calciumsulfonat-Calciumcarbonat-Komplex | 12.0 Teile |
| Gemahlene, gecoatete Kreide | 17.0 Teile |
| N-Oleyl-Propylendiamin-Dioleat | 0.5 Teile |

Nach der Vereinigung der Mahlpaste und Harzlösung werden noch 1.0 Teile Methylethylketoxim hinzugefügt. Die Viskosität dieses Beschichtungsmittels beträgt 1.000 mPa.s, obwohl diese Viskosität bereits deutlich höher ist als die der vorangegangenen Formulierungen, lassen sich diese Formulierungen noch einwandfrei mit herkömmlichen Anlagen versprühen.

### Beispiel 5 (erfindungsgemaß):

Analog zum Beispiel 2 werden zu 100 Teilen des Beschichtungsmittels gemäß Beispiel 4 drei Teile des Nethacrylatcopolymers hinzugefügt. Es erfolgt kein signifikanter Viskositätsanstieg.

### Beispiel 6 (erfindungsgemäß):

Analog zu Beispiel 3 werden zu 100 Teilen des Beschichtungsmittels gemäß Beispiel 4 drei Teile des Styrol-Copolymers hinzugefügt. Es erfolgt keine sig-gnifikante Viskositätserhöhung.

Die Ergebnisse der Eignungstests sind in Tabelle 2 aufgeführt.

**Tabelle 2**

| | Beisp. 7 | Beisp. 8 | Beisp. 9 |
|---|---|---|---|
| Ablauf bei 23°C | 18 cm | 11 cm | 12 cm |
| Penetration bei 23°C | 5 cm | 6 cm | 6 cm |
| Ablauf nach 5 min 80°C | 18 cm | 6 cm | 7 cm. |

Wie aus den Tabellen ersichtlich ist, ändert sich das Ablaufverhalten bei 23°C durch den Zusatz der erfindungsgemäßen Bestandteile nicht signifikant im Vergleich zum Stand der Technik. Die Penetration (Kriechvermögen) bei 23°C nimmt ebenfalls nicht signifikant ab, wenn die erfindungsgemäßen Zusätze erfolgen. Damit ist gezeigt, daß sowohl das Benetzungsverhalten als auch das Kriechvermögen durch die erfindungsgemäßen Zusätze nicht signifikant beeinflußt werden, auch die übrigen Eignungstests wie Salzsprühtest gemäß DIN 53167 oder Freibewitterungstests oder Kältebeständigkeit werden durch die erfindungsgemäßen Zusätze nicht signifikant beeinflußt, insbesondere nicht negativ beeinflußt.

Wie aus den Tabellen weiterhin ersichtlich, wird jedoch der Ablauf nach kurzzeitiger Temperaturbehandlung (5 min 80°C) signifikant in erwünschter Weise reduziert. Diese Ergebnisse der Labortests werden durch Praxisprüfungen vollauf bestätigt.

## Patentansprüche

1. Beschichtungsmittel auf der Basis von Filmbildnern, ausgewählt aus Wachsen, wachsartigen Verbindungen, luft-trocknenden Ölen oder Alkydharzen, ggf. Lösungsmitteln, nicht flüchtigen Ölen, Verlaufshilfsmitteln und korrosionsverhindernden Zusätzen, dadurch gekennzeichnet, dass sie bei Temperaturen von 60°C-160°C gelierende Zusätze enthalten, wobei die gelierenden Zusätze aus einer Mischung von
an sich bekannten feinteiligen Polymerpulvern und an sich bekannten Weichmachern für diese Polymerpulver
bestehen.

2. Beschichtungsmittel gemäß Anspruch 1, dadurch gekennzeichnet, dass die feinteiligen Polymerpulver ausgewählt werden aus Polyvinylchlorid, Vinylchlorid-Vinylacetat-Copolymere, Copolymere der C₁- bis C₈-Alkylester der Methacrylsäure oder Acrylsäure, die ggf. weitere Comonomere enthalten können, Polystyrol, Copolymere des Styrols mit (Meth)acrylsäure, deren C₁- bis C₈-Alkylester und/oder Acrylnitril, die ggf. weitere Comonomere enthalten können, oder deren Mischungen, und die Weichmacher für diese Polymerpulver ausgewählt werden aus C₄ bis C₁₄-Alkylester der Phthalsäure, der Adipinsäure, der Sebazinsäure, Alkylsulfonsäureester des Phenols, Alkyl oder Arylester der Phosphorsäure, aliphatischen und/oder aromatische Kohlenwasserstoffharze, Ester der Kolophonium-Harzsäuren oder deren Mischungen.

3. Beschichtungsmittel gemäß Anspruch 1 oder 2, dadurch gekennzeichnet, dass das oder die Polymerpulver in Mengen von 0.1 bis 15 Gew.%, vorzugsweise von 3 bis 7 Gew.% und der oder die Weichmacher in Mengen von 0.1 bis 15 Gew.%, vorzugsweise von 3 bis 10 Gew.% bezogen auf die Gesamtzusammensetzung verwendet werden.

4. Beschichtungsmittel gemäß Anspruch 1 bis 3, dadurch gekennzeichnet, dass die gelbildenden Zusätze im Temperaturbereich zwischen 80°C und 120°C gelieren.

5. Beschichtungsmittel gemäß Anspruch 1 bis 4, dadurch gekennzeichnet, dass als Filmbildner Wachse oder wachsartige Verbindungen wie Polyethylenwachse, Paraffinwachse, Mikrowachse oder Kohlenwasserstoff- und/oder Esterharze oder Alkydharze oder trocknende Öle entweder einzeln oder in Kombination verwendet werden.

6. Beschichtungsmittel gemäß Anspruch 1 bis 5, dadurch gekennzeichnet, dass als Verlaufshilfsmittel kationische Netzmittel oder grenzflächenaktive flüssige Harze verwendet werden.

7. Beschichtungsmittel gemäß Anspruch 1 bis 6, dadurch gekennzeichnet, dass als korrosionsverhindernde Zusätze überbasische Calciumsulphonate, Füllstoffe, Korrosionsschutzpigmente oder Metallsalze von oxidierten Wachsen entweder allein oder in Kombination verwendet werden.

8. Verwendung der Beschichtungsmittel gemäß Anspruch 1 bis 7 als Korrosionsschutzbeschichtung für metallische Gegenstände, vorzugsweise Kraftfahrzeuge.

9. Verfahren zur Beschichtung von metallischen Gegenständen mit Beschichtungsmitteln gemäß Anspruch 1 bis 7, dadurch gekennzeichnet, dass dieses Beschichtungsmittel zunächst in an sich bekannter Weise auf den metallischen Gegenstand durch Sprühen oder Tauchen aufgebracht wird, danach ggf. die flüchtigen Bestandteile abgedampft werden und die Beschichtung anschließend bei 60°C bis 160°C, vorzugsweise bei 80°C bis 120°C geliert wird.

10. Verfahren nach Anspruch 9, dadurch gekennzeichnet, dass die Gelierung in Trockenöfen oder mit Hilfe von IR-Strahlern durchgeführt wird.

11. Verwendung von bei erhöhter Temperatur gelierenden Zusätzen zur Herstellung von Beschichtungsmitteln auf der Basis von Filmbildnern gemäß mindestens einem der Ansprüche 1 bis 7.

## Claims

1. Coating compositions based on film formers selected from waxes, wax-like compounds, air-drying oils or alkyd resins, optionally solvents, nonvolatile oils, flow control agents and corrosion-preventing additives, characterized in that they contain additives which gel at temperatures of 60°C to 160°C and which consist of a mixture of fine-particle polymer powders known per se and plasticizers known per se for these polymer powders.

2. Coating compositions as claimed in claim 1, characterized in that the fine-particle polymer powders are selected from polyvinyl chloride, vinyl chloride/vinyl acetate copolymers, copolymers of C₁₋₈ alkyl esters of methacrylic acid or acrylic acid which may optionally contain further comonomers, polystyrene, copolymers of styrene with (meth)acrylic acid, C₁₋₈ alkyl esters thereof and/or acrylonitrile which may optionally contain further comonomers or mixtures thereof and in that the plasticizers for these polymer powders are selected from C₄₋₁₄ alkyl esters of phthalic acid, adipic acid, sebacic acid, alkyl sulfonic acid esters of phenol, alkyl or aryl esters of phosphoric acid, aliphatic and/or aromatic hydrocarbon resins, esters of colophony resinic acids or mixtures thereof.

3. Coating compositions as claimed in claim 1 or 2, characterized in that the polymer powder(s) is/are used in quantities of 0.1 to 15% by weight and preferably in quantities of 3 to 7% by weight while the plasticizer(s) is/are used in quantities of 0.1 to 15% by weight and preferably in quantities of 3 to 10% by weight, based on the composition as a whole.

4. Coating compositions as claimed in claims 1 to 3, characterized in that the gel-forming additives gel at temperatures of 80°C to 120°C.

5. Coating compositions as claimed in claims 1 to 4, characterized in that waxes or wax-like compounds, such as polyethylene waxes, paraffin waxes, microwaxes or hydrocarbon and/or ester resins or alkyd resins or drying oils, are used either individually or in combination as the film formers.

6. Coating compositions as claimed in claims 1 to 5, characterized in that cationic wetting agents or interfacially active liquid resins are used as the flow control agents.

7. Coating compositions as claimed in claims 1 to 6, characterized in that superbasic calcium sulfonates, fillers, corrosion-controlling pigments or metal salts of oxidized waxes are used either individually or in combination as the corrosion-preventing additives.

8. The use of the coating compositions claimed in claims 1 to 7 as corrosion-control coatings for metallic objects, preferably motor vehicles.

9. A process for coating metallic objects with the coating compositions claimed in claims 1 to 7, characterized in that the coating compositions are first applied to the metallic object in known manner by spraying or dipping, after which any volatile constituents are evaporated off and the coating is subsequently gelled at 60°C to 160°C and preferably at 80°C to 120°C.

10. A process as claimed in claim 9, characterized in that the coating is gelled in drying ovens or by infrared heaters.

11. The use of additives gelling at elevated temperature for the production of the coating compositions based on film formers claimed in at least one of claims 1 to 7.

## Revendications

1. Enduits à base d'agents filmogènes, sélectionnés parmi des cires, des composés cireux, des huiles ou des résines alkydes séchant à l'air, le cas échéant, de solvants, d'huiles non volatiles, d'adjuvants d'écoulement et d'additifs anticorrosifs, caractérisés en ce qu'ils renferment, à des températures de 60 à 160 °C, des additifs gélifiants, lesquels sont constitués d'un mélange de polymères en poudre à fines particules connus en soi et de plastifiants pour ces poudres de polymère connus en soi.

2. Enduits selon la revendication 1, caractérisés en ce que les polymères en poudre à fines particules, sont sélectionnés parmi le chlorure de polyvinyle, les copolymères de chlorure de vinyle-acétate de vinyle, les copolymères d'esters d'alkyle en C₁ à C₈ de l'acide méthacrylique ou de l'acide acrylique, qui peuvent renfermer éventuellement d'autres comonomères, du polystyrène, les copolymères de styrène avec l'acide (méth)acrylique, des esters d'alkyle en C₁ à C₈ de ceux-ci et/ou l'acrylonitrile, qui peuvent contenir éventuellement d'autres comonomères, ou les mélanges de ceux-ci, et en ce que les plastifiants sélectionnés pour ces polymères en poudre sont sélectionnés parmi les esters d'alkyle en C₄ à C₁₄ de l'acide phtalique, de l'acide adipique ou de l'acide sébacique, les esters d'alkyle ou d'aryle de l'acide phosphorique, les résines d'hydrocarbures aliphatiques et/ou aromatiques, les esters d'acides résiniques de colophane ou les mélanges de ceux-ci.

3. Enduits selon la revendication 1 ou 2, caractérisés en ce que le ou les polymères en poudre est (sont) mis en oeuvre en proportions de 0,1 à 15 % en poids, de préférence de 3 à 7 % en poids, et ce que le ou les plastifiants est (sont) utilisé(s) en quantités de 0,1 à 15 % en poids, de préférence de 3 à 10 % en poids, par rapport à la composition totale.

4. Enduits selon les revendications 1 à 3, caractérisés en ce que les additifs gélifiants gélifient dans l'intervalle de températures de 80 à 120 °C.

5. Enduits selon les revendications 1 à 4, caractérisés en ce que l'on utilise, seules ou en association, comme cires ou composés cireux filmogènes, tels des cires de polyéthylène, des cires de paraffine, des cires microcristallines ou des résines d'hydrocarbures et/ou à esters ou alkydes, ou des huiles siccatives.

6. Enduits selon les revendications 1 à 5, caractérisés en ce que l'on utilise comme adjuvants d'écoulement, des agents mouillants cationiques ou des résines tensioactives liquides.

7. Enduits selon les revendications 1 à 6, caractérisés en ce que l'on utilise comme additifs inhibiteurs de corrosion, des sulfonates de calcium surbasiques, des charges, des pigments de protection contre la corrosion ou des sels métalliques de cires oxydées, soit seuls soit en association.

8. Utilisation des enduits selon les revendications 1 à 7, comme enduction de protection contre la corrosion pour les objets métalliques, de préférence les véhicules.

9. Procédé d'enduction des objets métalliques par des enduits selon les revendications 1 à 7, caractérisé en ce que cet enduit est tout d'abord appliqué sur l'objet métallique d'une manière connue en soi, par pulvérisation ou immersion, les constituants volatiles étant ensuite évaporés le cas échéant et l'enduction étant ensuite gélifiée entre 60 et 160 °C, de préférence entre 80 et 120 °C.

10. Procédé selon la revendication 9, caractérisé en ce que la gélification est opérée dans des fours de séchage ou à l'aide de radiateurs à IR.

11. Utilisation d'additifs gélifiants à température accrue pour la confection d'enduits à base d'agents filmogènes selon au moins une des revendications 1 à 7.
